# EUROPEAN PATENT APPLICATION

(11) **EP 0 962 858 A2**
(43) Date of publication of application: **08.12.1999**
(21) Application number: 99104077.5
(22) Date of filing: 18.03.1999
(51) Int. Cl.: G06F 9/44

(54) **Date conversion module**

(30) Priority: 18.03.1998 US 40317
(71) Applicant: Zailer, Shmuel, Herzeliya 46599 (IL)
(72) Inventor: Zailer, Shmuel, Herzeliya 46599 (IL)
(74) Representative: Modiano, Guido, Dr.-Ing.

(57) **Abstract**

A system for aging an original date value to an aged date value. The system includes a date conversion module which is located between an input device and an application program. The date conversion module intercepts data from the input device, identifies any original date values in the data and then converts the original date value by aging, unless the original date value is an exceptional value. If the original date value is an exceptional value, the date value is not converted. The data, including any aged date values, are then passed to an application program. The date conversion module can then reverse the conversion for date values received from the application program. In addition, a system is provided for converting an original currency value to another currency. The monetary conversion module receives the original currency value, a reference date for performing the conversion and a type of the original currency, and the name of the currency to which the value should be converted. The conversion is then performed according to an exchange rate formula. In addition, the present invention could be used for other types of conversions, such as the conversion of different types of units of measurement, or to determine the presence or absence of a decimal point in a numerical value.

## Description

### FIELD AND BACKGROUND OF THE INVENTION

The present invention relates to a system and method for the implementation of a date conversion module for the storage and retrieval of dates and, more particularly, to a system and method for overcoming the "Year 2000" software problem.

The "Year 2000" problem is inherent to many different types of software. In the year 2000 of the Gregorian calendar, which is used by most businesses and individuals all over the world as either the main or adjunct calendar, many different software programs could potentially fail if the "Year 2000" problem is not solved. The problem itself is the result of the storage of date information with the year represented as only the last two digits,.so that the year "1998" would be stored only as the last two digits or "98", for example. The storage of year information as only the last two digits is a wide-spread programming convention.

Unfortunately, the result of such a convention is that many software programs could potentially crash, or at least function in an abnormal or unstable fashion, when the Gregorian calendar reaches the year 2000. For example, some software programs do not allow any field of data to have the value zero. However, in the year 2000, the last two digits of the year value will be "00", which might not be accepted by the software program as a result. Alternatively, the software program might assign an unexpected, different meaning to the value "00". Also, some software programs insist that all year values must be greater than a certain number, for example the two digit value "80" for 1980. In addition, many programs assume that having a larger two digit year value means that the stored date belongs to a later year, for example in order to sort date values by year as a numerical sort, which is not true for the year 2000 and for years after the year 2000. For example, the year "2005" would appear to be an earlier year than the year "1998" under these circumstances, since the two digit value "98" is greater than the two digit value "05". Thus, recording the year 2000 as "00" clearly presents many problems for software programs.

Current solutions for existing software programs have involved changing existing database and source code for software by expanding or enlarging the year field to include the value of the century, or by adding a field for the value of the century, for example. Other changes might include the insertion of an algorithm within the existing software program for deciding the century value according to some cut-off point. For example, all two digit year values above 40 could be assigned a century value of "19", while all two digit year values below 40 could be assigned a century value of "20". Another solution is to "age" all stored dates, so that the year value is reduced by a certain constant, and then to restore the aged dates to their correct value prior to display. Currently, all of the above solutions are only being implemented in each software program individually, so that the existing source code must be modified.

All of these solutions require access to the source code, but the uncompiled source code is not always available. Even if the code is available, any changes which are made to the code have the potential to add new computational errors or "bugs". Also, if the changes are not made consistently throughout a computational system, even a correct implementation of these solutions could result in further problems. Furthermore, many legacy programs which form the cornerstone of the software system of businesses were originally programmed in languages for which software engineers are relatively scarce. For example, relatively few programmers are trained in the language COBOL today, although many legacy programs are written in this language. Thus, currently available solutions to the "Year 2000" problem, all of which focus upon alterations to the code for individual software programs, have many drawbacks.

A far more useful and practical solution would solve the "Year 2000" problem once, without the need for reprogramming existing software code. The solution would be even more useful if it could be implemented by non-programmers. Such a solution would also preferably be reversible, so that some years after the year 2000 of the Gregorian calendar had passed, the software could be allowed to revert to normal operation. Unfortunately, such a solution is not currently available.

There is therefore a need for, and it would be useful to have, a method and a system for implementing a software module for the conversion of dates, particularly to solve the "Year 2000" problem, which is easy to use and reversible, which is external to individual software programs, yet which is a substantially universal solution to the problem of date conversion by software programs and for other types of conversion problems.

### SUMMARY OF THE INVENTION

According to the present invention, there is provided a system for aging an original date value to an aged date value, comprising: (a) an input device for receiving the original date value; (b) a date conversion module for identifying the original date value and for aging the original date value to the aged date value; and (c) an application program for receiving the aged date value, the aged date value being in a format suitable for the application program. Preferably, the step of aging is performed by by adjusting the original date value by a predetermined numerical constant.

Preferably, the system further includes (d) a database for storage of data, the application program retrieving and storing information in the database, the data including at least one date value, the at least one date value of the data being identified and aged by the date conversion module.

Preferably, the application program outputs an output date value, the date conversion module receives the output date value, identifies the output date value and reverse-ages the output date value to form a corrected output date value, the system further comprising: (d) an output device for receiving the corrected output date value from the date conversion module and for displaying the corrected output date value. Preferably, the date conversion module identifies the original date value from data according to an identifier selected from the group consisting of a location of the original date value in the data, a context of the original date value in the data and an internal code in the data. Also preferably, the original date value is identified by the date conversion module as a date exception, such that the date conversion module gives the original date value to the application program substantially without aging the original date value.

Preferably, the corrected output date value is formed by reversing the step of adjusting the output date value by the predetermined numerical constant. More preferably, the aged date value is formed by subtracting the predetermined numerical constant from the original date value and wherein the corrected output date value is formed by adding the predetermined numerical constant to the aged output date value. Alternatively and preferably, the aged date value is formed by adding the predetermined numerical constant to the original date value and wherein the corrected output date value is formed by subtracting the predetermined numerical constant from the aged output date value.

According to preferred embodiments of the present invention, the input device is selected from the group consisting of a GUI interface, a terminal emulation interface, a printer emulation interface, a GUI printer emulation interface. Preferably, the input device is a terminal emulation software. Preferably, the output device is a printer. Also preferably, the output device is a terminal. More preferably, the output device is a terminal emulation software.

According to other preferred embodiments of the present invention, the predetermined numerical constant is chosen such that a numerical value of the last two digits of the year 2000 of the Gregorian calendar is within a range of values acceptable to the application program.

According to another embodiment of the present invention, there is provided a method for aging an original date value for input to a application program, and for correcting an output aged date value from the application program for display, the method comprising the steps of: (a) receiving the original date value; (b) subtracting a predetermined numerical constant from the original date value to form an aged date value; (c) receiving the output aged date value from the application program; (d) adding the predetermined numerical constant to the output aged date value to form the corrected date value; and (e) displaying the corrected date value.

Preferably, the step of receiving the original date value includes the step of identifying the original date value. More preferably, the step of identifying the original date value from date is performed according to an identifier selected from the group consisting of a location of the original date value in the data, a context of the original date value in the data and an internal code in the data. Most preferably, the original date value is identified as a date exception, such that the original date value is given to, or received from, the application program substantially without aging the original date value.

According to another embodiment of the present invention, there is provided a system for converting an original currency value to a convened currency value, comprising: (a) an input device for receiving the original currency value; (b) a monetary conversion module for converting the original currency value to the converted currency value by adjusting the original currency value according to an exchange rate formula; and (c) an application program for receiving the converted currency value, the converted currency value being in a format suitable for the application program. Preferably, the monetary conversion module identifies a currency type according to a characteristic of a data stream containing the original currency value. More preferably, the characteristic is selected from the group consisting of a context of the data stream, a location of the original currency value in the data stream, and a combination of the context and the location. Most preferably, the monetary conversion module receives a reference date and a type of the original currency for performing the conversion according to the exchange rate value.

Preferably, the system further includes (d) an output device for receiving the corrected output currency value from the monetary conversion module and for displaying the corrected output currency value. Also preferably, the monetary conversion unit receives a symbol for the original currency value. More preferably, the monetary conversion unit adds a symbol and a name for the corrected output currency value for display by the output device.

According to preferred embodiments of the present invention, a date field is identified in data for the determination of the year value. Preferably, the date field is identified by an instruction from the software program for the display of the date field. More preferably, the date field is identified according to context within the data. Most preferably, the date field is identified as a sequence with two or three pairs of digits, each pair being separated by a slash symbol. Hereinafter, the term "slash symbol" refers to a separator symbol such as a "/", a comma (",") or a period ("."). More preferably, if an exception is detected, the date value is not converted. Most preferably, the exception is selected from the group consisting of "99/99/99" and "00/00/00".

Hereinafter, the term "input device" refers to a terminal, a terminal emulation program, a GUI program, another software application program which provides input data, an e-mail device and any other type of device or software which can provide input data through a stream of digital or analog pulses. The term "terminal emulation program" refers to a software program which is able to play the role of the terminal for receiving and displaying data on a computer screen. The term "GUI program" refers to a software program which accepts data intended for one type of computer display, for example standard character mode output, and then modifies the data to enable a computer screen to show the data as a GUI (graphical user interface). Hereinafter, the term "e-mail device" includes both software and hardware necessary to send and receive e-mail, such as the combination of a modem and a proprietary electronic mail software program, such as Eudora™.

Hereinafter, the term "output device" refers to a terminal, a terminal emulation program, a printer, and an e-mail device. Hereinafter, the term "I/O device" refers to an input and/or an output device. Hereinafter, the term "application program" refers to a software program or a group of software programs which include at least one date processing function such as comparing dates, sorting dates, and storing dates.

Hereinafter, the term "date" refers to any type of date in any type of format in which the year value is stored in a shortened format as fewer than four digits. For example, the year value for "1998" could be stored as only the last two digits, or "98". Substantially any other values for the date could also be stored in the date format, including month, day, week, season or quarter, or substantially any other type of time description. Hereinafter, the term "date exception" refers to a stored date in which at least one value in at least one field has a special meaning, such that the value is not a regular date value. For example, if all values in the stored date are the digit zero, the stored date is generally considered to be "the lowest possible date" for date processing purposes, and is not an actual date. Similarly, if all values in the stored date are the digit nine, the stored date is generally considered to be "the highest possible date" for date processing purposes, and again is not an actual date.

Hereinafter, the term "regular date value" refers to date information either entered by the user or else received from another software application in any suitable format.

Hereinafter, the term "network" refers to a connection between any two computers which permits the transmission of data.

### BRIEF DESCRIPTION OF THE DRAWINGS

The foregoing and other objects, aspects and advantages will be better understood from the following detailed description of a preferred embodiment of the invention with reference to the drawings, wherein:
FIG. 1 is a schematic block diagram of a system for implementing the date conversion module according to the present invention; and
FIG. 2 is a schematic block diagram of a system for implementing the currency conversion module according to the present invention.

### DETAILED DESCRIPTION OF PREFERRED EMBODIMENTS

An object of this invention is the provision of a method and a system to prevent inconsistencies and solve problems caused by the storage of the year value of dates as the last two digits of the value. The method and system of the present invention requires the "aging" all stored values for the year portion of dates, such as those values contained within a database, as well as all values received as date input values from the user. The term "aging" refers to the practice of adjusting the year value of all dates by a predetermined numerical constant, for example by reducing the year value of all dates by subtracting a predetermined constant from the full four digit year value. Typically, the predetermined constant is the number "28", since this number permits the day of the week for any particular date to remain constant, as well as delaying the Year 2000 problem for another twenty-eight years. Other numbers for the predetermined constant could also be chosen by one of ordinary skill in the art as being particularly useful.

In order for dates which are output from an application program to be correct, the dates must then be "reverse-aged" by increasing the year value of all output dates, for example by adding the predetermined constant to the year value of the output dates. As noted previously, such "aging" has only been done in the prior art as a piece-meal solution for implementation only in individual application programs. By contrast, the method and system of the present invention are able to provide a global solution for substantially all application programs, without requiring changes to individual application programs.

The method and system of the present invention are able to provide such a global solution to the "year 2000 problem" by providing a date conversion module, which sits between the input devices, the application program and database, and the output devices, The date conversion module accepts date input values from the input device. These date input values, also referred to as "regular date values".

The date conversion module then ages the year value from the input device, and sends the aged year value to the application program. The date conversion module can also receive an aged year value from the application program in the format required by that program, for example "97". The date conversion module then "reverse-ages" the year value to the correct year value, and sends the correct year value to an output device.

In either case, the date conversion module must be able to identify the date value by identifying the date field according to an identifier selected from the group consisting of the location of the date value in the data, the context of the date value and the presence of an internal code. For example, often the date field is always present in a predetermined location when data is being input through a GUI. The context of the date value can be identified as a sequence with two or three pairs of digits, each pair being separated by a slash symbol, for example. An internal code could be an internal instruction from a software application, which could be as simple as the presence of the word "date" before the date, for example. The identification of the date value also enables the date conversion module to identify a date exception.

The principles and operation of a method and a system for implementing a date conversion module according to the present invention may be better understood with reference to the drawings and the accompanying description, it being understood that these drawings are given for illustrative purposes only and are not meant to be limiting.

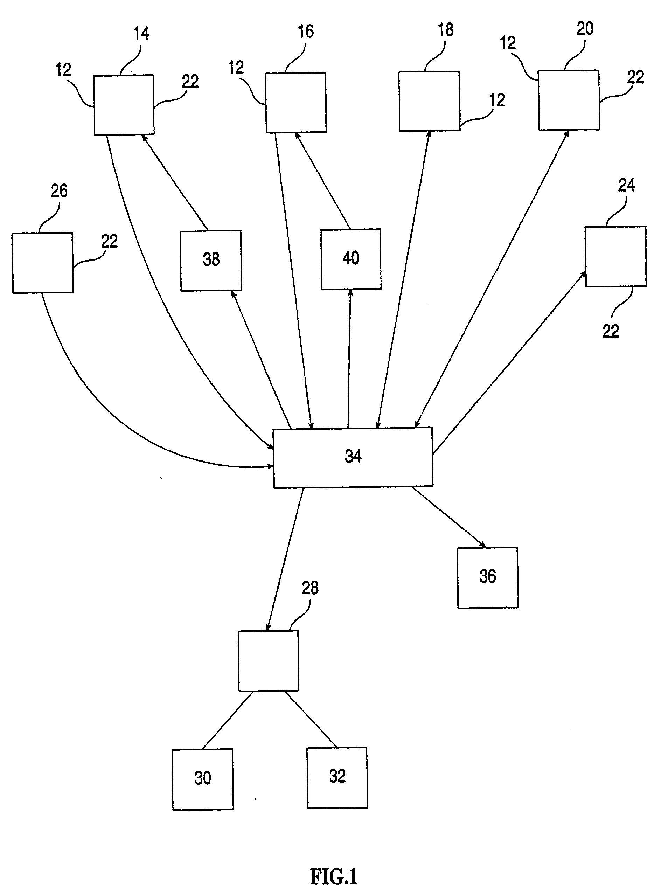

Referring now to the drawings, Figure 1 shows a schematic block diagram of a system for implementing the date conversion module according to the present invention. A system **10** features a number of output devices **12** including, but not limited to, a terminal **14**, a printer **16**, an e-mail device **18**, a terminal emulation software or interface **20** and a GUI interface **22**, as well as substantially any other type of device capable of accepting data for output or for input.

As noted previously, the term "e-mail device" includes both software and hardware necessary to send and receive e-mail, such as the combination of a modem and a proprietary electronic mail software program, such as Eudora™. Also, the term "terminal emulation software" refers to a software program which is able to play the role of the terminal for receiving and displaying data on a computer screen. The term "GUI" refers to a software program which accepts data intended for one type of computer display, for example standard character mode output, and then modifies the data to enable a computer screen to show the data as a GUI (graphical user interface). GUI interface **22** may be accessed through a mouse or other pointing device (not shown), or with a touch sensitive screen (not shown), for example. As shown, GUI interface **22** is typically displayed on terminal **14**.

System **10** also features a number of input devices **24** for permitting the user to enter data including, but not limited to, terminal **14**, terminal emulation interface or software **20**, GUI interface **22**, another software application program which provides input data **26**, e-mail device **18** and substantially any other type of device or software which can provide input or output data through a stream of digital or analog pulses, such as a GUI printer emulation interface or a printer emulation interface (not shown).

Data is stored, retrieved and manipulated by an application program **28**, of which a plurality are shown. Application program **28** typically stores data in some type of non-volatile storage such as a hard disk **30**, for example. The stored data may be organized in a data base **32**, for example. In any case, all types of data stored in some form of memory storage will be referred to herein as "stored data".

A date conversion module **34** is also shown. Date conversion module **34** receives data from input devices **22**. Date conversion module **34** then identifies the date by detecting,the presence of a date field, for example by location or context in the received data, or by the presence of an internal code. Date conversion module **34** then converts the format of any date values by aging the year value of the dates. Preferably, date conversion module **34** is able to detect date exceptions and to handle them appropriately, for example by passing on the exception data without conversion, Date conversion module **34** then passes the received data to application program **28**.

Application program **28** then performs any necessary functions on the received data, and passes output data to date conversion module **34**. Date conversion module **34** detects the presence of a date field, for example by location in the received data. Preferably, date conversion module **34** is able to detect exceptions and to handle them appropriately. Date conversion module **34** then reverse-ages the year value of the output data, unless a date exception is detected, so that the year value is the correct value. Date conversion module **34** then sends the output data to output device **12**. For example, date conversion module **34** could send the output data to be displayed on terminal **14**. Alternatively, date conversion module **34** could send the output data to be printed by printer **16**. Application program **28** determines the type of output device **12** to which the output data is sent, and in which format the output data is to be displayed. Date conversion module **34** passes on the output data to the correct output device **12** with any necessary date conversions.

As noted previously, many application programs store and manipulate the year value of dates only as the last two digits of the year. For example, the year "1997" would be stored and manipulated only as the digits "97". However, this format for the year value of dates will cause many problems, including errors and instabilities, in the year 2000 of the Gregorian calendar. In that year, the year value will become "00". Date conversion module **34** prevents any problems caused by this format for the year value in the year 2000 as follows.

For the input of data to application program **28**, date conversion module **34** ages all year values, preferably by subtracting a constant value to all year values to produce an aged year value. For example, if the constant value was "10", the year 2000 would become "90". The value "90" would be the aged year value for the year 2000. The goal is to bring a numerical value of the last two digits of the year 2000 of the Gregorian calendar within a range of values which is acceptable to application program **28**. Optionally, date conversion module **34** could add a constant value to all year values for this conversion.

After aging the year value, date conversion module **34** then sends the year value, for example "90", to application program **28**, which is expecting the last two digits of the year value.

For the output of data to output device **12**, date conversion module **34** reverses the process for a year value received from application program **28** by reverse-aging the year value of the date. For example, date conversion module **34** could receive the value "90" from application program **28**, which represents the aged value for the year "2000". Date conversion module **34** would then reverse-age the year value by adding the value "10" to produce the correct four digit year value "00". The correct year value, along with the other data, is then sent to output device **12**. Optionally, date conversion module **34** could subtract a constant value to all year values for this conversion.

Date conversion module **34** preferably includes an internal information storage **36** for storing information related to the identification of date fields in data being sent to output device **12**, as well as the identification of date fields in data being sent from input device **22**. Internal information storage **36** preferably stores all "exceptional" date values, such as those date values in which all fields have the value "zero" or in which all fields have the value "nine". These exceptional date values are used as internal markers by application program **28**, and should not be convened by "aging". In addition, information stored in internal information storage **36** enables date conversion module **34** to identify the year value in the date field of data being passed through date conversion module **34**, so that the adjustment process described previously can be performed.

The process of identification of the date fields in both input and output data is preferably performed either automatically or after a learning phase, or as a combination of these two types of identification processes. For example, automatic identification can be done by searching for fields within the data which have the format "nn/nn/nn" or by searching for a special internal code within the data stream sent from application program **28** which indicates the appearance of a date field following that internal code. Such an internal code could be the word "date", for example. Identification after a learning phase involves giving information to date conversion module **34** so that date conversion module **34** can identify a display screen of data, or a portion of a display screen, which contains dates in known areas.

Date conversion module **34** preferably also includes various modules for formatting the data to be output through various display devices **12**. One example of such a module is a screen output module **38** for the formatting of data to be displayed on terminal **14**.

Another example of such a module is a printer output module **40** for formatting the date fields in data being sent to printer **16**. The data, including the date fields, would then be sent to printer **16** in the proper format, as determined by application program **28**. Other output modules would be prepared for other types of output devices **18** as necessary, such as a modem or other output device.

With regard to receiving data from input devices **22**, preferably date conversion module **34** is able to receive the data in any desired input format, and then is able to convert the year values to the aged year values.

According to another preferred embodiment of the present invention, rather than correcting simply for the year value to overcome the "Year 2000" problem, the present invention could also be used to implement a module to convert such numerical values as different types of currencies, for example. As an example, the European Union is currently attempting to circulate a single currency for all of the different national currencies now being used in different European countries. This new Europe-wide currency is called the "Euro". The Euro is intended to replace the pound in England, the mark in Germany, the franc in France, and so forth.

Currently, many different types of application programs in each country are specifically designed to display monetary values in terms of the currency for that country. For example, monetary values in England are displayed in pounds. However, when the Euro replaces all of these different currencies, both the name of the currency and the symbol associated with the currency will change. Thus, all of the different application programs will also need to be changed.

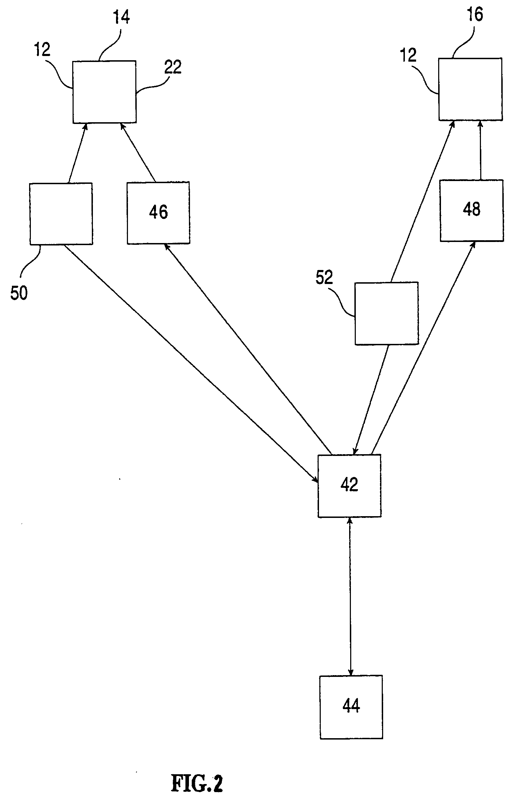

As shown in Figure 2, a preferred embodiment of the present invention would include a monetary conversion module **42**. Similar to date conversion module **34**, monetary conversion module **42** would perform a conversion to transform Euro-based input of monetary values to the type of currency associated with a particular monetary application program **44**, for example. This conversion would be performed by adjusting the currency value according to an exchange rate formula. Preferably, monetary conversion module **42** would also be given a type of the starting currency, a reference date for the conversion, and the type of the desired final currency after conversion. The reference date is necessary since currency conversions are typically performed according to the relative value of the two currencies on a certain date. More preferably, monetary conversion module **42** would have default values for the type of the starting and final currencies and for the reference date, in case this information is not given.

Monetary application program **44** would then store, retrieve and manipulate the monetary data. Monetary values in output data from monetary application program **44** would again be restored to the Euro format, for example, before being displayed on output device **12**.

Such manipulation of the monetary data would preferably be performed as follows. Monetary conversion module **42** would identify a monetary value being given as input data, as well as the currency in which the monetary value is given. Optionally and preferably, monetary conversion module **42** would identify the reference date and the original currency in which the monetary value was given. Monetary conversion module **42** then converts the monetary value to the value in a different currency. For output data, monetary conversion module **42** would reverse-convert the output monetary value to the correct currency for display, optionally using the reference date and the original currency for the conversion.

Preferably, monetary conversion module **42** would be able to identify the currency type, as well as the original currency value, according to a characteristic of the data stream. For example, the presence of the symbol "$" indicates that the next digit or digits will be a monetary value given in U.S. dollars. Such a symbol is an example of a context of the monetary value as the characteristic of the data stream. The monetary value could also be identified by location, since some software programs always place monetary values in a predetermined location within the output data, for example.

Also preferably, monetary conversion module **42** is able to identify the reference date for performing the conversion. Such an identification could be performed similarly to date conversion module **34**, according to a location or context of the date value, or through an internal code in the data.

Similar to date conversion module **34**, monetary conversion module **42** preferably also includes various modules for formatting the data to be output through various output devices **12**. One example of such a module is a screen output module **46** for the formatting of data to be displayed on terminal **14**. Screen output module **46** could preferably add a symbol for the type of currency, such as a "$" for the U.S. dollar, and also a name of the type of currency, to the monetary value in the data to be displayed on terminal **14**.

Another example of such a module is a printer output module **48** for formatting the monetary values in data being sent to printer **16**. Other output application modules could be prepared for interactions between monetary conversion module **42** and substantially any type of hardware, such as a modem or other output device.

With regard to receiving data from input devices **22**, preferably monetary conversion module **42** includes a number of data input modules for receiving this data. For example, a screen input module **50** would receive the monetary values in terms of the "Euro" currency and then convert the Euro value to the value of a national currency, such as the English pound.

A terminal emulator module **52** would enable monetary conversion module **42** to interact with a terminal emulation protocol being used to operate a terminal device, which as indicated earlier may be terminal **14**. Terminal emulator module **52** would perform the conversion of the monetary value of data in terms of the "Euro" currency to the value in terms of the desired national currency such as the English pound for input data, and would also handle the correct display of the output data in the correct format after correcting the monetary value in terms of the national currency to the value in terms of the "Euro" currency. In addition, the type of the original currency and the date for the desired conversion must be given, in order to determine the correct exchange rate between the original currency and the "Euro" currency.

Such a monetary conversion module has a number of applications. For example, the monetary values in the data could be displayed in a number of different types of currencies for display to a group of people. As another example, some currencies might undergo a period of inflation, so that a monetary value in that currency would need to be adjusted by adding certain digits before the original monetary value.

Both the date conversion module and the monetary conversion module of the present invention share a number of advantages. Both modules enable the necessary conversions to be performed globally by a single software module, rather than changing each individual application program. These modules of the present invention sit between the application program and any input or output devices, converting the numeric data of the date or monetary values. Conversion of date and monetary values are simply two examples of the conversion of values according to the present invention. Other types of values could also be converted such as a unit of measurement. Another example of a conversion is the presence or absence of a decimal point in numerical values. Thus, the original application programs do not need to be changed internally, since all changes are performed externally by a conversion module, such as the date conversion module and the monetary conversion module of the present invention.

It will be appreciated that the above descriptions are intended only to serve as examples, and that many other embodiments are possible within the spirit and the scope of the present invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A system for aging an original date value to an aged date value, comprising:
(a) an input device for receiving the original date value;
(b) a date conversion module for identifying the original date value and for aging the original date value to the aged date value; and
(c) an application program for receiving the aged date value, the aged date value being in a format suitable for said application program.

2. The system of claim 1, wherein the step of aging is performed by by adjusting the original date value by a predetermined numerical constant.

3. The system of claim 1, further comprising:
(d) a database for storage of data, said application program retrieving and storing information in said database, said data including at least one date value, said at least one date value of said data being identified and aged by said date conversion module.

4. The system of claim 1, wherein said application program outputs an output date value, said date conversion module receives said output date value, identifies said output date value and reverse-ages said output date value to form a corrected output date value, the system further comprising:
(d) an output device for receiving said corrected output date value from said date conversion module and for displaying said corrected output date value.

5. The system of claim 1, wherein said date conversion module identifies the original date value from data according to an identifier selected from the group consisting of a location of the original date value in said data, a context of the original date value in said data and an internal code in said data.

6. The system of claim 1, wherein the original date value is identified by said date conversion module as a date exception, such that said date conversion module gives the original date value to said application program substantially without aging the original date value.

7. The system of claim 1, wherein said corrected output date value is formed by reversing the step of adjusting said output date value by said predetermined numerical constant.

8. The system of claim 7, wherein said aged date value is formed by subtracting said predetermined numerical constant from the original date value and wherein said corrected output date value is formed by adding said predetermined numerical constant to said aged output date value.

9. The system of claim 7, wherein said aged date value is formed by adding said predetermined numerical constant to the original date value and wherein said corrected output date value is formed by subtracting said predetermined numerical constant from said aged output date value.

10. The system of claim 1, wherein said input device is selected from the group consisting of a GUI interface, a terminal emulation interface, a printer emulation interface, a GUI printer emulation interface.

11. The system of claim 1, wherein said input device is a terminal emulation software.

12. The system of claim 1, wherein said output device is a printer.

13. The system of claim 1, wherein said output device is a terminal.

14. The system of claim 13, wherein said output device is a terminal emulation software.

15. The system of claim 1, wherein said predetermined numerical constant is chosen such that a numerical value of the last two digits of the year 2000 of the Gregorian calendar is within a range of values acceptable to said application program.

16. A method for aging an original date value for input to a application program, and for correcting an output aged date value from the application program for display, the method comprising the steps of:
(a) receiving the original date value;
(b) subtracting a predetermined numerical constant from the original date value to form an aged date value;
(c) receiving the output aged date value from the application program;
(d) adding said predetermined numerical constant to the output aged date value to form the corrected date value; and
(e) displaying the corrected date value.

17. The method of claim 16, wherein the step of receiving the original date value includes the step of identifying the original date value.

18. The method of claim 17, wherein the step of identifying the original date value from date is performed according to an identifier selected from the group consisting of a location of the original date value in said data, a context of the original date value in said data and an internal code in said data.

19. The method of claim 18, wherein the original date value is identified as a date exception, such that the original date value is given to, or received from, said application program substantially without aging the original date value.

20. A system for converting an original currency value to a converted currency value, comprising:
(a) an input device for receiving the original currency value;
(b) a monetary conversion module for converting the original currency value to the converted currency value by adjusting the original currency value according to an exchange rate formula; and
(c) an application program for receiving the converted currency value, the converted currency value being in a format suitable for said application program.

21. The system of claim 20, wherein said monetary conversion module identifies a currency type according to a characteristic of a data stream containing the original currency value.

22. The system of claim 21, wherein said characteristic is selected from the group consisting of a context of said data stream, a location of the original currency value in said data stream, and a combination of said context and said location.

23. The system of claim 22, wherein said monetary conversion module receives a reference date and a type of the original currency for performing the conversion according to said exchange rate value.

24. The system of claim 23, further comprising:
(d) an output device for receiving said corrected output currency value from said monetary conversion module and for displaying said corrected output currency value.

25. The system of claim 24, wherein said monetary conversion unit receives a symbol for the original currency value.

26. The system of claim 25, wherein said monetary conversion unit adds a symbol and a name for said corrected output currency value for display by said output device.

27. The system of claim 20, wherein said input device is a GUI interface being displayed on a computer screen.

28. The system of claim 20, wherein said input device is a terminal being operated according to a terminal emulation protocol.

29. The system of claim 20, wherein said output device is a printer.

30. The system of claim 20, wherein said output device is a terminal.

31. The system of claim 30, wherein said terminal is being operated according to a terminal emulation protocol.
